(19) Europäisches Patentamt
European Patent Office
Office européen des brevets

(11) EP 1 982 144 B1

(12) **FASCICULE DE BREVET EUROPEEN**

(45) Date de publication et mention
de la délivrance du brevet:
**14.05.2014 Bulletin 2014/20**

(21) Numéro de dépôt: **07704428.7**

(22) Date de dépôt: **07.02.2007**

(51) Int Cl.:
***G01C 11/06*** (2006.01)

(86) Numéro de dépôt international:
**PCT/EP2007/051173**

(87) Numéro de publication internationale:
**WO 2007/090848 (16.08.2007 Gazette 2007/33)**

(54) **PROCEDE DE GEO-LOCALISATION D'UNE OU PLUSIEURS CIBLES**

VERFAHREN ZUR GEOLOKALISIERUNG EINES ODER MEHRERER ZIELE

METHOD FOR GEOLOCALIZATION OF ONE OR MORE TARGETS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.02.2006 FR 0601125**

(43) Date de publication de la demande:
**22.10.2008 Bulletin 2008/43**

(73) Titulaire: **THALES**
**92200 Neuilly sur Seine (FR)**

(72) Inventeurs:
• **BRIDENNE, Gilles**
**F-75015 Paris (FR)**
• **PRENAT, Michel**
**F-92100 Boulogne (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 699 666    FR-A1- 2 719 920**
**US-A- 4 635 203**

## Description

Le domaine de l'invention est celui de la géo-localisation d'une ou plusieurs cibles immobiles et plus généralement du géo-référencement d'une zone au moyen d'un capteur optronique passif monté sur un aéronef. On entend par capteur optronique passif un capteur sans émetteur-récepteur optique tel qu'un télémètre laser.

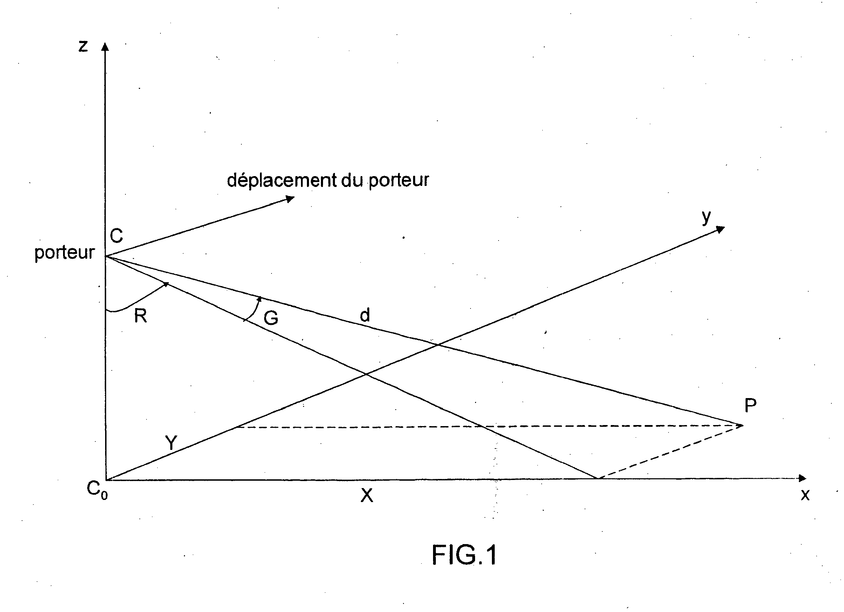

On rappelle en relation avec la figure 1, que la géo-localisation d'une cible immobile consiste à déterminer la position absolue de la cible au sol représentée par un point P, à partir des écarts d'abscisse X et d'ordonnée Y entre la cible et la projection au sol $C_0$ de l'aéronef aussi désigné porteur ; la position $C_0$ est fournie par le système de navigation de l'aéronef, en général avec une erreur. Les angles R et G sont respectivement les angles de roulis et de gisement de la ligne de visée de la cible dans un référentiel terrestre. Les angles G et R dépendent notamment de l'attitude de l'aéronef et de l'orientation de la ligne de visée par rapport à celle de l'aéronef ; ils sont fournis par le système de navigation de l'aéronef.

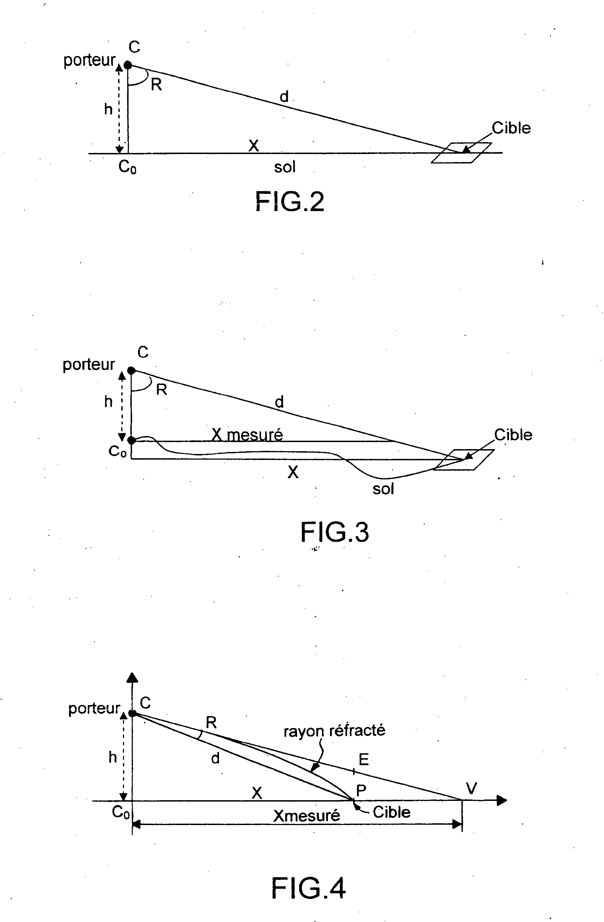

La figure 2 donne une coupe verticale de la figure 1, lorsque Y est nul ; sauf mention expresse, la suite du texte est basée sur ce cas, sans nuire à la généralité ; en effet, l'angle G est généralement petit, dans des conditions opérationnelles habituelles.

On a alors :

$$X = h\, \text{tg}\, R \quad (1)$$

h qui est la hauteur de l'aéronef à l'aplomb de $C_0$, est fournie par le système de navigation.

Le résultat obtenu pour X est sensible aux erreurs sur h et R surtout pour des incidences rasantes c'est-à-dire lorsque R est voisin de 90°. On a en effet au premier ordre :

$$\varepsilon_X = (\partial X\, /\, \partial h)\, \varepsilon_h + (\partial X\, /\, \partial R)\, \varepsilon_R$$

$$\varepsilon_X/X = \varepsilon_h/h + \varepsilon_R\, (\, 1 + \text{tg}^2\, R)\, /\,\ \text{tg}\, R,$$

Pour des incidences rasantes, on a $1/\text{tg}\, R \ll \text{tg}\, R$ et on obtient finalement :

$$\varepsilon_X/X = \varepsilon_h/h + \varepsilon_R\, \text{tg}\, R,$$

$\varepsilon_X$, $\varepsilon_h$, $\varepsilon_R$ étant respectivement les erreurs sur X, h et R.

Ainsi par exemple, pour h = 1000 m, $\varepsilon_h$ = 0 et X = 30 km, une erreur de 1 mrad sur R conduit à une erreur de géo-localisation de 900 m, c'est-à-dire de 3% ce qui est inacceptable d'un point de vue opérationnel.

En effet, dans le cas d'une application à un système de reconnaissance, la précision de la géo-localisation est une spécification fondamentale de ce système. Dans le cas d'une mission préparée, le système doit acquérir des données dans une zone du théâtre d'opération définie par ses coordonnées absolues et désignée zone cible ; une erreur de géo-localisation conduit à augmenter la taille de la zone à couvrir pour être sûr qu'elle contienne la zone cible. De plus, la connaissance de la distance entre le capteur et les points à imager est nécessaire pour garantir la qualité de l'image (flou de bougé).

En outre, une précision sur R à 1 mrad près est très difficile à atteindre en particulier si le capteur est monté sur une nacelle (« pod » en anglais) qui elle-même bouge par rapport à l'aéronef: dans ce cas, une erreur de plusieurs mrad est usuelle.

De plus, lorsque le terrain est accidenté et que la différence de hauteur entre la cible et $C_0$ n'est pas connue, la formule (1) conduit à une erreur sur la mesure de X encore plus importante comme illustré sur la figure 3. On obtient X mesuré au lieu de X.

En outre, la réfraction atmosphérique introduit une erreur supplémentaire sur la mesure de X, comme illustré sur la figure 4. On a X mesuré au lieu de X. Cette erreur peut être de l'ordre de 900 mètres.

Le document US 4 635 203 A décrit un procédé de cartographie d'un terrain comprenant une cible potentielle à partir d'un aéronef au moyen d'un capteur optronique passif, impliquant les étapes suivantes:

• acquisition par le capteur d'une première image contenant la cible potentielle à partir d'une première position de l'aéronef et d'une seconde image contenant la cible potentielle à partir d'une position différente de l'aéronef, ces images ayant une zone de recouvrement, et

- calcul d'un modèle d'élévation numérique dans un référentiel terrestre basé sur ces images.

Le but de l'invention est de déterminer au moyen d'un capteur optronique passif, l'abscisse X avec une meilleure précision, de l'ordre de 1% par exemple, notamment lorsque la différence de hauteur entre la cible et $C_0$ n'est pas connue et/ou en présence d'une éventuelle réfraction atmosphérique.

Pour atteindre ce but, l'invention propose un procédé de géolocalisation d'au moins une cible P immobile à partir d'un aéronef au moyen d'un capteur optronique passif. Il est principalement caractérisé en ce qu'il comprend les étapes suivantes :

- acquisition par le capteur d'au moins une image I1 contenant la cible P à partir d'une position $C_1$ de l'aéronef et d'une image I2 contenant la cible à partir d'une position $C_2$ de l'aéronef, ces images I1 et I2 ayant une zone de recouvrement,
- identification dans ladite zone de recouvrement d'au moins une cible P commune aux deux images I1 et I2 et détermination de la position de chaque cible P dans chacune des deux images,
- calcul de la distance d entre chaque cible P et un point C, de coordonnées connues par rapport à $C_1$ et $C_2$, en fonction de l'angle $\beta1$ entre une direction de référence et la ligne de visée de l'image I1, l'angle $\beta2$ entre la même direction de référence et la ligne de visée de l'image I2, de la position de chaque cible P dans l'image I1. et dans l'image I2,
- P étant défini dans un référentiel terrestre par son abscisse X et son ordonnée Y par rapport à là projection au sol de l'aéronef C, calcul pour chaque cible de X et Y en fonction des distances d.

La quantité X ainsi obtenue est indépendante de la hauteur h, ce qui permet de s'affranchir des erreurs sur h et de la méconnaissance de la différence de hauteur entre la cible et $C_0$. Elle est aussi quasiment indépendante des effets de réfraction atmosphérique, contrairement à celle obtenue par le calcul décrit dans le préambule.

Selon une caractéristique de l'invention, la position de chaque cible P dans les images I1 et I2 est calculée en nombre de pixels et convertie respectivement en un angle $\varepsilon1$ et un angle $\varepsilon2$.

Avantageusement, il comprend une étape d'acquisition de l'angle de roulis R et de l'angle de gisement G de la ligne de visée en C dans un référentiel terrestre et la position de chaque cible P est calculée aussi en fonction de ces angles de roulis R et de gisement G.

Selon une autre caractéristique de l'invention, la distance d est sensiblement égale à $(B \cos G)/(\beta2 - \beta1 + \varepsilon2 - \varepsilon1)$, B étant la distance entre les points C1 et C2.

Les angles de roulis R et de gisement G étant déterminés, X est de préférence sensiblement égal à d cos G.sin R et Y sensiblement égal à d sin G.

Pour des incidences rasantes et notamment lorsque G est petit (cos G proche de 1), on a tg R >> 1 et donc l'erreur $\varepsilon_X/X$ est quasiment égale à $\varepsilon_d/d$, ce qui permet de relâcher l'exigence de précision sur l'angle de roulis R. Or, on obtient une erreur sur d d'environ 1% et donc une erreur sur X d'environ 1% également.

Selon une autre caractéristique de l'invention, la géo-localisation est effectuée à bord de l'aéronef.

L'invention concerne également un procédé de géo-référencement d'une zone, caractérisé en ce qu'il comprend la répétition du procédé de géo-localisation pour différentes cibles de la zone.

L'invention à aussi pour objet un coffret de traitement comportant au moins une carte électronique, caractérisé en ce qu'au moins une carte électronique comprend des moyens de mise en oeuvre du procédé précédemment décrit, ainsi qu'une nacelle de reconnaissance destinée à être installée sur un aéronef, caractérisée en ce qu'elle comprend un tel coffret de traitement.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite présente la géométrie dans l'espace du problème posé de la géo-localisation d'un point P,
la figure 2 déjà décrite illustre schématiquement le calcul de la différence d'abscisse X entre une cible P et C0 selon l'état de la technique,
la figure 3 déjà décrite illustre schématiquement le calcul de la différence d'abscisse X mesuré entre une cible P et C0 selon l'état de la technique, lorsque le terrain est accidenté,
la figure 4 déjà décrite illustre l'erreur supplémentaire induite par la réfraction atmosphérique, pour une géolocalisation selon l'état de la technique,
la figure 5 illustre schématiquement un exemple de calcul d'une distance d par triangulation selon l'invention, dans le cas particulier d'un angle de gisement nul,
la figure 6 illustre schématiquement une étape de calcul d'un angle $\varepsilon1$ à partir de la position d'une cible P dans une image I1,

la figure 7 illustre schématiquement le calcul de la distance d'une cible en présence de réfraction atmosphérique, dans les 3 dimensions d'un référentiel terrestre, selon l'invention,
la figure 8 illustre schématiquement un exemple de calcul d'une distance d par triangulation selon l'invention, dans le cas d'un angle de gisement G non nul,
la figure 9 représente schématiquement une nacelle de reconnaissance selon l'invention.

Selon l'invention, X est déterminé par la formule : X = d sin R.

On a alors :

$$\varepsilon_X = (\partial X / \partial d)\, \varepsilon_d + (\partial X / \partial R)\, \varepsilon_R$$

$$\partial X / \partial d = \sin R \text{ et } \partial X / \partial R = d \cos R$$

$$\varepsilon_X / X = \varepsilon_d / d + \varepsilon_R / tg\, R.$$

Pour des incidences rasantes, on a tg R »1 et donc : $\varepsilon_X/X = \varepsilon_d/d$.

Dans ce cas, l'erreur sur X provient alors seulement de l'erreur sur d ; elle est quasiment indépendante de l'erreur sur R. Pour une erreur relative sur d d'environ 1%, on obtient alors une erreur sur X de seulement 300 m, pour une cible située à 30 km.

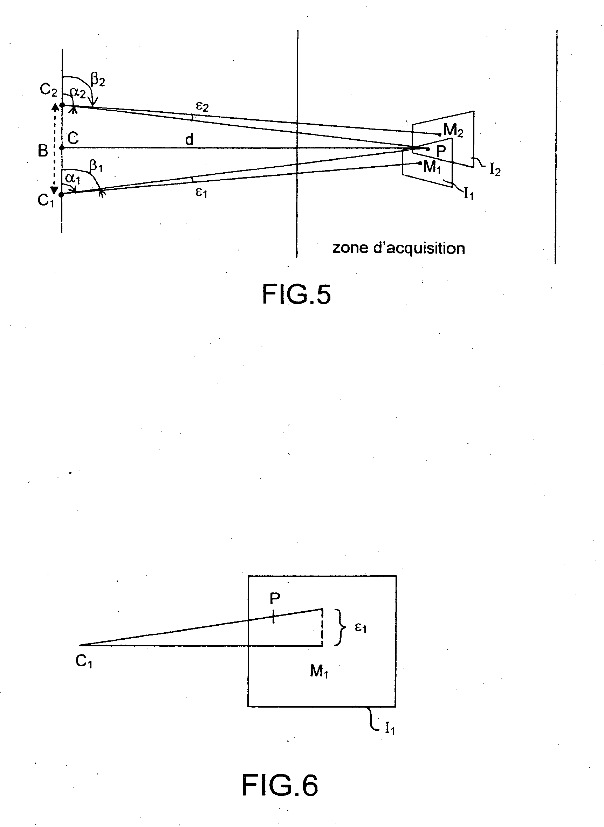

Selon l'invention, la distance d est obtenue par triangulation comme illustré sur la figure 5, dans le cas d'un angle de gisement nul (G=0). Le plan de la figure est celui des lignes de visées de l'aéronef qui se déplace entre une position $C_1$ et une position $C_2$.

Durant le processus d'acquisition, l'aéronef est successivement localisé en $C_1$ et $C_2$ et le capteur monté sur l'aéronef acquiert respectivement des images $I_1$ et $I_2$ présentant une zone de recouvrement. Pour simplifier, on assimile la position du capteur à celle de l'aéronef. Les images acquises dans la zone d'acquisition ne sont pas nécessairement des images successives. L'image I1 est par exemple acquise lors d'un balayage aller de la zone d'acquisition et l'image I2 lors d'un balayage retour. Le capteur voit donc chaque cible P de cette zone deux fois, c'est-à-dire une fois par image.

La distance d entre cette cible P et un point C dont les coordonnées sont connues par rapport à $C_1$ et $C_2$, est donnée approximativement par la formule :

$$d = B / (\alpha 2 - \alpha 1)$$

B est la distance entre $C_1$ et $C_2$ mesurée par le système de navigation, $\alpha 1$ l'angle entre une direction de référence et $C_1P$, $\alpha 2$ l'angle entre la même direction de référence et $C_2P$. La direction de référence est par exemple la direction du Nord, ou encore celle du segment $C_1C_2$. Sur la figure C est au milieu de $C_1C_2$ mais il est situé plus généralement dans le voisinage de $C_1$ et $C_2$.

on a :

$$\alpha 2 - \alpha 1 = \beta 2 - \beta 1 + \varepsilon 2 - \varepsilon 1$$

ces quantités étant affectées d'erreurs de mesure.
$\beta 1$ mesuré par un système inertiel embarqué tel que par exemple un gyromètre est l'angle de la ligne de visée de l'image $I_1$, c'est-à-dire l'angle entre une direction de référence et $C_1M_1$, où $M_1$ est le centre de l'image $I_1$, idem pour $\beta 2$ avec $M_2$ et $I_2$.
$\varepsilon 1$ est l'angle entre $C_1M_1$ et $C_1P$, déterminé à partir de la position de P par rapport au centre de $I_1$ mesurée en nombre de pixels, idem pour $\varepsilon 2$ avec $C_2M_2$ et et $I_2$.

On a représenté figure 6 une image $I_1$. La cible P est repérée dans cette image par ses coordonnées établies en nombre de pixels par rapport au centre M1. Comme la largeur de l'image mesurée en pixels correspond à un angle déterminé, vu de l'avion, l'angle $\varepsilon 1$ est directement déduit des coordonnées de P : $\varepsilon 1$ est obtenu par conversion d'un nombre de pixels en un angle.

Lorsque par exemple la largeur de l'image comprend 1000 pixels et correspond à un angle de 1°, l'angle $\varepsilon 1$ pour une cible P située à 400 pixels de M1 est de 0.4 °.

De même, les valeurs de roulis R associées aux différentes cibles P sont obtenues, à l'instar des angles $\alpha$, en faisant la somme des roulis de la ligne de visée (équivalents aux $\beta$) et d'angles (équivalents aux $\varepsilon$) obtenus par conversion des positions en roulis des cibles P dans l'image, positions comptées en pixels.

L'erreur obtenue pour d dépend de :

- l'erreur sur B mesurée par le système de navigation et qui est typiquement inférieure à 0.3 %,
- l'erreur sur $\alpha2 - \alpha1$ dit angle relatif dont la précision est principalement limitée par la dérive du système inertiel de l'ordre de 1°/heure et par la « marche aléatoire » de l'ordre de 0.05 °/heure$^{1/2}$ ; cette erreur est inférieure à 100 $\mu$rad en quelques secondes. Pour une distance B de 1000 mètres et une distance d de 30 kilomètres, l'erreur relative introduite par ce terme est de l'ordre de 0.3 %.

On obtient finalement une erreur sur d inférieure à 1 % et donc une erreur sur X également inférieure à 1%, dans les conditions défavorables décrites précédemment (incidence rasante).

Avec ce calcul, la distance X est obtenue sans qu'il soit nécessaire d'acquérir la hauteur h, ce qui présente aussi un avantage. Cependant, la mesure de hauteur peut être utilisée à condition qu'on puisse lui accorder une confiance suffisante, par exemple si elle est assez précise et si la différence de hauteur entre la cible et $C_0$ est connue.

Ce calcul est de préférence réitéré pour plusieurs cibles P de la zone de recouvrement.

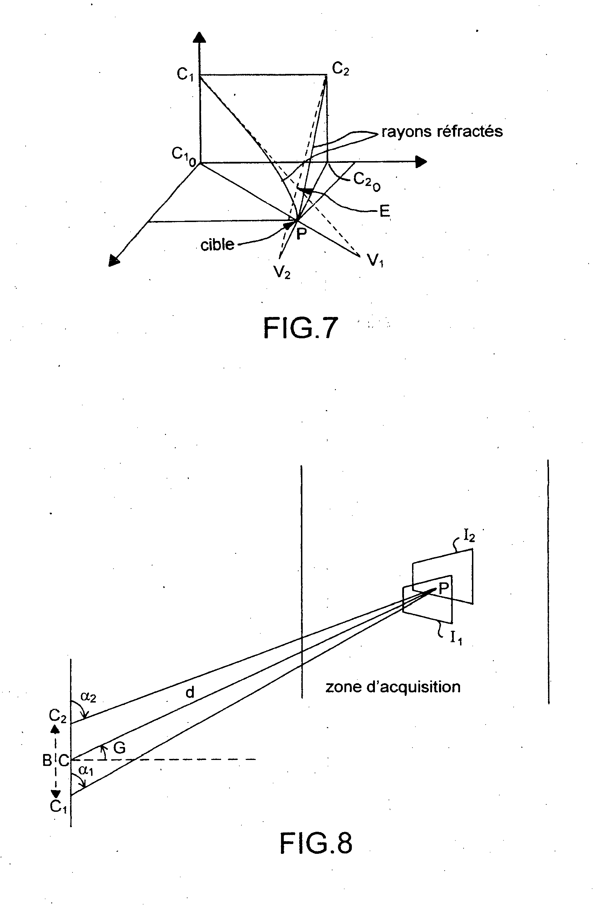

Ce calcul présente un autre avantage : la distance obtenue est quasiment indépendante des effets de réfraction atmosphérique, contrairement à celle obtenue par le calcul décrit dans le préambule. On a illustré figure 4 l'erreur provoquée par la courbure concave du rayon réfracté issu de la cible, lorsque la géolocalisation est réalisée selon l'état de la technique. Lorsque la distance est calculée par triangulation selon l'invention, le point estimé E de la cible est quasiment à la verticale de la cible réelle P : E est à l'intersection de $C_1V_1$ et $C_2V_2$, $V_1$ et $V_2$ étant respectivement les points visés à partir des positions $C_1$ et $C_2$ de l'aéronef, comme illustré figure 7. La figure 4 est une vue de la figure 7 dans un plan contenant les points $C_1$, $C_{10}$ et $V_1$ ou $C_2$, $C_{20}$ et $V_2$. $C_{10}$ et $C_{20}$ sont les projections au sol des positions $C_1$ et $C_2$ de l'aéronef.

L'erreur introduite par l'utilisation du point estimé E est négligeable. En reprenant l'exemple précédent avec une erreur due à la courbure du rayon égale à 900 m, on obtient une erreur sur la distance estimée de - 9 m.

L'invention a été décrite pour un angle de gisement G nul ; elle s'applique également lorsque la ligne de visée est dépointée en gisement d'un angle G non nul comme illustré figure 8. Dans ce cas, la distance d est sensiblement égale à (B cos G) / ($\alpha_2 - \alpha_1$), soit (B cos G)/$\beta2 - \beta1 + \varepsilon2 - \varepsilon1$). Et l'on a

$$X = d \cdot \cos G \sin R$$

$$Y = d \sin G.$$

On réalise aussi selon l'invention, un géo-référencement d'une zone en appliquant ce procédé de géo-localisation à plusieurs cibles de la zone à référencer, et en interpolant pour les autres cibles de la zone.

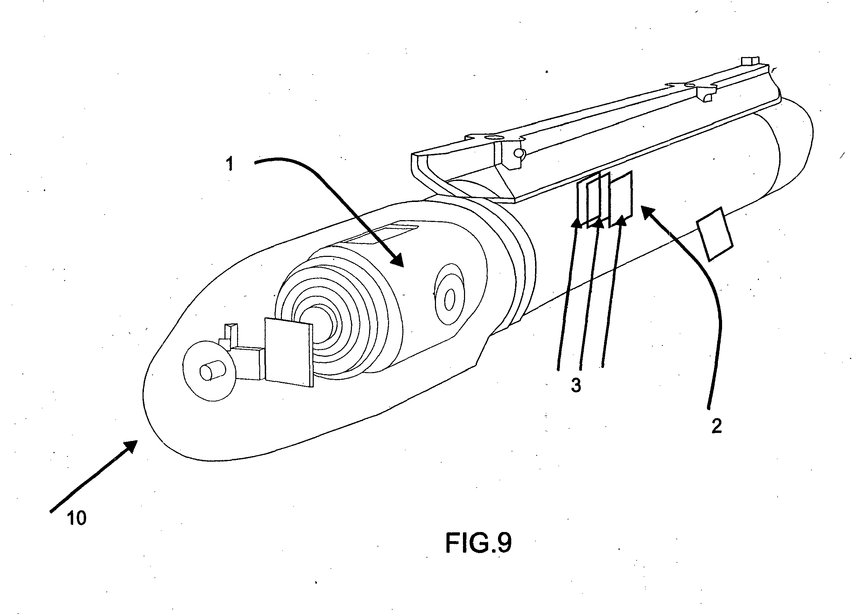

Selon un mode de réalisation, le procédé selon l'invention est mis en oeuvre dans une nacelle de reconnaissance montée sur un aéronef. La nacelle 10 représentée figure 9 comprend un capteur optronique passif 1 et un coffret de traitement 2 qui comporte des cartes électroniques de traitement 3. De manière classique, le capteur est orientable et acquiert les images ; le procédé est mis en oeuvre par un logiciel implémenté sur une ou plusieurs des cartes électroniques.

**Revendications**

**1.** Procédé de géo-localisation d'au moins une cible P immobile à partir d'un aéronef au moyen d'un capteur optronique passif, **caractérisé en ce qu'**il comprend les étapes suivantes :

- acquisition par le capteur d'au moins une image I1 contenant la cible P à partir d'une position $C_1$ de l'aéronef et d'une image I2 contenant la même cible P à partir d'une position $C_2$ de l'aéronef, ces images I1 et I2 ayant une zone de recouvrement,
- identification dans ladite zone de recouvrement de la cible P commune aux deux images I1 et I2 et détermination de la position de la cible commune P dans chacune des deux images,
- calcul de la distance d entre un point C de coordonnées connues par rapport à $C_1$ et $C_2$, et la cible P, en fonction de l'angle β1 entre une direction de référence et la ligne de visée de l'image I1, l'angle β2 entre la même direction de référence et la ligne de visée de l'image I2, et de la position de la cible P dans l'image I1 et dans l'image I2,

- P étant défini dans un référentiel terrestre par son abscisse X et son ordonnée Y par rapport à la projection au sol de l'aéronef C, calcul de X et Y pour la cible P en fonction de la distance d.

2. Procédé de géo-localisation selon la revendication précédente, **caractérisé en ce que** la position de chaque cible P dans les images I1 et I2 est calculée en nombre de pixels et convertie respectivement en un angle ε1 et un angle ε2.

3. Procédé de géo-localisation selon l'une quelconque des revendications précédentes, **caractérisé en ce que** la ligne de visée en C présentant un angle de roulis R et un angle de gisement G dans un référentiel terrestre, il comprend une étape d'acquisition des angles de roulis R et de gisement G et **en ce que** la position de chaque cible P est calculée en fonction de ces angles de roulis R et de gisement G.

4. Procédé de géo-localisation selon la revendication précédente, **caractérisé en ce que** la distance d est sensiblement égale à

$$(B \cos G)/(\beta 2 - \beta 1 + \varepsilon 2 - \varepsilon 1),$$

B étant la distance entre les points C1 et C2.

5. Procédé de géo-localisation selon l'une quelconque des revendications 3 ou 4, **caractérisé en ce que** les angles de roulis R et de gisement G étant déterminés, la position de chaque cible P par rapport à la projection au sol de l'aéronef en C est donnée par $X = d \cos G \sin R$ et $Y = d \sin G$.

6. Procédé de géo-localisation selon l'une quelconque des revendications précédentes, **caractérisé en ce que** la géo-localisation est effectuée à bord de l'aéronef.

7. Procédé de géo-référencement d'une zone, **caractérisé en ce qu'**il comprend la répétition du procédé de géo-localisation selon l'une des revendications précédentes pour différentes cibles de la zone.

8. Coffret de traitement (2) comportant au moins une carte électronique (3) destinée à être reliée à un capteur optronique passif (1) monté sur un aéronef, **caractérisé en ce qu'**au moins une carte électronique (3) comprend des moyens de mise en oeuvre de toutes les étapes du procédé selon l'une des revendications précédentes.

9. Nacelle de reconnaissance (10) destinée à être installée sur un aéronef et équipé d'un capteur optronique passif (1), **caractérisée en ce qu'**elle comprend un coffret de traitement (2) selon la revendication précédente, relié au capteur optronique passif (1).

**Patentansprüche**

1. Verfahren zum Geolokalisieren wenigstens eines stationären Ziels P von einem Luftfahrzeug mittels eines passiven optronischen Sensors, **dadurch gekennzeichnet, dass** es die folgenden Schritte umfasst:

- Erfassen, durch den Sensor, wenigstens eines das Ziel P enthaltenden Bildes I1 von einer Position $C_1$ des Luftfahrzeugs und eines dasselbe Ziel P enthaltenden Bildes I2 von einer Position $C_2$ des Luftfahrzeugs, wobei die Bilder I1 und I2 eine Überlappungszone haben;
- Identifizieren des Ziels P, das beiden Bildern I1 und I2 in der Überlappungszone gemeinsam ist, und Ermitteln der Position des gemeinsamen Ziels P in jedem der beiden Bilder;
- Berechnen der Distanz d zwischen einem Punkt C von bekannten Koordinaten relativ zu $C_1$ und $C_2$ und dem Ziel P in Abhängigkeit von dem Winkel β1 zwischen einer Referenzrichtung und der Sichtlinie des Bildes I1, dem Winkel β2 zwischen derselben Referenzrichtung und der Sichtlinie des Bildes I2 und der Position des Ziels P in dem Bild I1 und in dem Bild I2;
- Berechnen, wenn P in einer terrestrischen Referenz durch seine Abszisse X und seine Ordinate Y relativ zur Projektion des Luftfahrzeugs C am Boden definiert wird, von X und Y für das Ziel P in Abhängigkeit von der Distanz d.

**2.** Geolokalisierungsverfahren nach dem vorherigen Anspruch, **dadurch gekennzeichnet, dass** die Position jedes Ziels P in den Bildern I1 und I2 als eine Anzahl von Pixeln berechnet und jeweils in einen Winkel $\varepsilon 1$ und einen Winkel $\varepsilon 2$ umgewandelt wird.

**3.** Geolokalisierungsverfahren nach einem der vorherigen Ansprüche, **dadurch gekennzeichnet, dass** es, da die Sichtlinie in C einen Rollwinkel R und einen Peilwinkel G in einer terrestrischen Referenz aufweist, einen Schritt des Erfassens des Rollwinkels R und des Peilwinkels G umfasst, und dadurch, dass die Position jedes Ziels P in Abhängigkeit von diesem Rollwinkel R und diesem Peilwinkel G berechnet wird.

**4.** Geolokalisierungsverfahren nach dem vorherigen Anspruch, **dadurch gekennzeichnet, dass** die Distanz d im Wesentlichen gleich

$$(B \cos G)/(\beta 2 - \beta 1 + \varepsilon 2 - \varepsilon 1) \text{ ist,}$$

wobei B die Distanz zwischen den Punkten C1 und C2 ist.

**5.** Geolokalisierungsverfahren nach Anspruch 3 oder 4, **dadurch gekennzeichnet, dass**, wenn der Rollwinkel R und der Peilwinkel G ermittelt sind, die Position jedes Ziels P relativ zur Projektion des Luftfahrzeugs am Boden bei C durch X = d cos G sin R und Y = d sin G angegeben wird.

**6.** Geolokalisierungsverfahren nach einem der vorherigen Ansprüche, **dadurch gekennzeichnet, dass** die Geolokalisierung an Bord des Luftfahrzeugs durchgeführt wird.

**7.** Verfahren zum Georeferenzieren einer Zone, **dadurch gekennzeichnet, dass** es die Wiederholung des Geolokalisierungsverfahrens nach einem der vorherigen Ansprüche für verschiedene Ziele der Zone umfasst.

**8.** Verarbeitungsgehäuse (2), das wenigstens eine elektronische Karte (3) zum Koppeln mit einem an Bord eines Luftfahrzeugs montierten passiven optronischen Sensor (1) umfasst, **dadurch gekennzeichnet, dass** wenigstens eine elektronische Karte (3) Mittel zum Implementieren aller Schritte des Verfahrens nach einem der vorherigen Ansprüche umfasst.

**9.** Aufklärungszelle (10) zur Installation auf einem Luftfahrzeug, die mit einem passiven optronischen Sensor (1) ausgestattet ist, **dadurch gekennzeichnet, dass** sie ein Verarbeitungsgehäuse (2) nach dem vorherigen Anspruch umfasst, das mit dem passiven optronischen Sensor (1) gekoppelt ist.

**Claims**

**1.** A method for the geo-localisation of at least one stationary target P from an aircraft by means of a passive optronic sensor, **characterised in that** it comprises the following steps:

- acquiring, by said sensor, at least one image I1 containing the target P from a position $C_1$ of said aircraft and an image I2 containing the same target P from a position $C_2$ of said aircraft, said images I1 and I2 having an overlapping zone;
- identifying the target P common to said two images I1 and I2 in said overlapping zone and determining the position of said common target P in each of said two images;
- calculating the distance d between a point C of known coordinates relative to $C_1$ and $C_2$ and said target P as a function of the angle $\beta 1$ between a reference direction and the line of sight of said image I1, the angle $\beta 2$ between the same reference direction and the line of sight of said image I2 and the position of said target P in said image I1 and in said image I2;
- calculating, with P being defined in a terrestrial reference by its abscissa X and its ordinate Y relative to the projection on the ground of said aircraft C, X and Y for said target P as a function of the distance d.

**2.** The geo-localisation method according to the preceding claim, **characterised in that** the position of each target P in said images I1 and I2 is calculated as a number of pixels and is respectively converted into an angle $\varepsilon 1$ and an angle $\varepsilon 2$.

3. The geo-localisation method according to any one of the preceding claims, **characterised in that**, with the line of sight in C having a roll angle R and a bearing angle G in a terrestrial reference, it comprises a step of acquiring roll R and bearing G angles, and **in that** the position of each target P is calculated as a function of these roll R and bearing G angles.

4. The geo-localisation method according to the preceding claim, **characterised in that** the distance d is substantially equal to

$$(B \cos G)/(\beta 2 - \beta 1 + \varepsilon 2 - \varepsilon 1),$$

with B being the distance between the points C1 and C2.

5. The geo-localisation method according to claim 3 or 4, **characterised in that**, with the roll R and bearing G angles being determined, the position of each target P relative to the projection on the ground of the aircraft at C is provided by $X = d \cos G \sin R$ and $Y = d \sin G$.

6. The geo-localisation method according to any one of the preceding claims, **characterised in that** the geo-localisation is carried out on board said aircraft.

7. A method for geo-referencing a zone, **characterised in that** it comprises the repetition of the geo-localisation method according to any one of the preceding claims for different targets of the zone.

8. A processing unit (2) comprising at least one electronic board (3) designed to be linked to a passive optronic sensor (1) mounted on board an aircraft, **characterised in that** at least one electronic board (3) comprises means for implementing all of the steps of the method according to any one of the preceding claims.

9. A reconnaissance pod (10) designed to be installed on an aircraft and provided with a passive optronic sensor (1), **characterised in that** it comprises a processing unit (2) according to the preceding claim linked to said passive optronic sensor (1).

FIG.1

FIG.2

FIG.3

FIG.4

FIG.5

FIG.6

**FIG.7**

**FIG.8**

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4635203 A